**Europäisches Patentamt**

**European Patent Office**

**Office européen des brevets**

(19)

(11) Veröffentlichungsnummer: **0 071 728**
B1

(12)

# EUROPÄISCHE PATENTSCHRIFT

(45) Veröffentlichungstag der Patentschrift:
04.09.85

(51) Int. Cl.⁴: **B 62 D 49/08,** B 62 D 37/04

(21) Anmeldenummer: **82105497.0**

(22) Anmeldetag: **23.06.82**

(54) **Ballastgewichtanordnung an landwirtschaftlichen Zugmaschinen.**

(30) Priorität: **11.08.81 DE 3131686**

(43) Veröffentlichungstag der Anmeldung:
**16.02.83 Patentblatt 83/7**

(45) Bekanntmachung des Hinweises auf die Patenterteilung:
**04.09.85 Patentblatt 85/36**

(84) Benannte Vertragsstaaten:
**AT DE FR GB IT NL SE**

(56) Entgegenhaltungen:
**DE - A - 2 217 864**
**FR - A - 2 333 692**
**FR - A - 2 452 859**
**US - A - 3 492 019**

(73) Patentinhaber: **Klöckner-Humboldt-Deutz Aktiengesellschaft,**
**Deutz-Mülheimer-Strasse 111 Postfach 80 05 09,**
**D-5000 Köln 80 (DE)**

(72) Erfinder: **Nau, Walter, Dipl.-Ing.,**
**Johann-Pullem-Strasse 8, D-5000 Köln 50 (DE)**
Erfinder: **Carstensen, Jes, Dipl.-Ing.,**
**Gregor-Vosen-Strasse 44, D-5042 Erftstadt (DE)**

## Beschreibung

Die Erfindung bezieht sich auf eine Ballastgewichtanordnung an landwirtschaftlichen Zugmaschinen, bei der plattenförmige Ballastgewichte einzeln mittels in ihrem oberen Bereich vorgesehener vorspringender Nasen in ein quer zur Längsmittelachse der Zugmaschine angeordnetes Tragelement, vorzugsweise frontseitiges Zugmaul, einhängbar sind, wobei die Ballastgewichte in ihrem sich unter das Tragelement erstreckenden Bereich jeweils einen Vorsprung aufweisen, der in eine korrespondierende Ausnehmung bzw. hinter einen Absatz des Tragelements ragt.

Bei einer bekannten Ballastgewichtanordnung der im Oberbegriff des Anspruchs 1 aufgeführten Gattung (FR-A-2 452 859) sind plattenförmige Ballastgewichte — mit ihren hakenförmigen Nasen hinter ein leistenartig ausgebildetes Teil des Tragelements greifend — eingehängt. Nach dem Einhängen schwenken die Ballastgewichte aufgrund ihrer Schwerpunktlage mit ihren Vorsprüngen in eine Ausnehmung des Tragelements ein. Eine Verriegelung der einzelnen Ballastgewichte gegen ein Herausschwenken in Fahrtrichtung und ein Herausspringen der hakenförmigen Nasen aus den Anlageflächen des Tragelements wird durch eine aus Rundmaterial bestehende Stange, die mit dem Tragelement verspannt ist, herbeigeführt. Dabei ist das Tragelement mit einer Platte verschraubt, die wiederum an der landwirtschaftlichen Zugmaschine über eine frontseitige Hubeinrichtung angeschlossen ist. Üblicherweise ist dagegen das Tragelement unmittelbar mit Vorderachsbock der Zugmaschine verschraubt, so dass die Ballastgewichte in geringerem Abstand zur Vorderachse angeordnet sind. In diesem Fall treten erhebliche Probleme bei der Montage und Demontage derart ausgebildeter Ballastgewichte auf. So bereitet beispielsweise das Einschieben der Verriegelungsstange zwischen den Vorsprüngen der Ballastgewichte und der Ausnehmung des Tragelements grosse Schwierigkeiten, da die Vorderräder — insbesondere bei Ackerschleppern mit Allradantrieb — ein seitliches Einschieben der Verriegelungsstange aus Platzmangel erschweren oder gar völlig unmöglich machen. Andererseits sind die Ballastgewichte am Tragelement nicht gegen seitliches Verrutschen gesichert, ein Problem, das gerade dann auftritt, wenn im rauhen Ackerbetrieb und bei Fahrt in Hanglage nicht die volle Anzahl Ballastgewichte am Tragelement befestigt ist.

Die der Erfindung zugrundeliegende Aufgabe besteht somit darin, die vorstehend beschriebenen Schwierigkeiten zu vermeiden und folglich eine Ballastgewichtanordnung zu schaffen, die sich durch einen baulich geringen Aufwand und eine einfache Montage sowie Demontage der einzelnen plattenförmigen Ballastgewichte auszeichnen soll, wobei sowohl einzelne als auch die Gesamtzahl aller anbringbaren Ballastgewichte gegen Querbewegungen und gegen ein Herausspringen aus dem Tragelement gesichert sein sollen.

Diese Aufgabe wird an einer Ballastgewichtanordnung der in Rede stehenden Gattung durch die im Kennzeichen des Anspruchs 1 ausgeführten Merkmale gelöst.

Durch die besondere Abstimmung der Abmessungen und der Form der einzelnen Ballastgewichte und des Tragelements sowie durch die am Tragelement vorhandene Schräge wird erreicht, dass beim Verschwenken eines mit seiner oberen Nase am Tragelement eingehängten Ballastgewichts bis in seine Endlage selbsttätig ein Einhaken des Ballastgewichts am Tragelement in seinem unteren schlecht zugänglichen Bereich erfolgt. Es muss nur noch dafür gesorgt werden, dass die Nase des jeweiligen Ballastgewichts durch eine Arretierung in dieser Endlage gehalten wird. Beim Herausschwenken der Nase aus seiner Endlage zu Demontagezwecken wird gleichzeitig der untere Vorsprung aus der Ausnehmung oder dem Raum hinter dem Ansatz des Tragelements herausgeschwenkt, so dass sich anschliessend das Ballastgewicht vom Tragelement abheben lässt.

In weiterer Ausgestaltung der Erfindung wird vorgeschlagen, dass zur Arretierung der Ballastgewichte in ihrer Endlage die Schrägen Einsenkungen aufweisen, in die die Nasen der Ballastgewichte eingreifen. Diese Art der Arretierung ermöglicht es, die Ballastgewichte in ihrer Endlage ohne besondere Hilfsmittel wie z.B. Schrauben, Bolzen oder Verriegelungsstange festzulegen. Die Montage und Demontage der Ballastgewichte ist dabei sehr zeitsparend, denn beim Montieren klinken die Nasen der Ballastgewichte in die Einsenkungen ein, während zur Demontage die Ballastgewichte nur etwas angehoben werden müssen, damit die Nasen sich aus der Einsenkung herausschwenken lassen.

Bei einem anderen Ausführungsbeispiel der Erfindung mit einer parallel zum Tragelement verlaufenden Verriegelungsstange wird vorgeschlagen, dass die Verriegelungsstange auf der Schräge des Tragelements derart befestigt ist, dass sie ein Zurückschwenken der Ballastgewichte in die Einhängelage sperrt. Diese Verriegelungsstange kann an einer gut zugänglichen Stelle des Tragelements mit nur wenigen Handgriffen angebracht werden. Dabei kann sie mittels Steckbolzen am Tragelement befestigt sein oder mittels Schrauben am Tragelement befestigbar und gegen die Nasen der Ballastgewichte verspannbar sein. Natürlich besteht auch die Möglichkeit, die Verriegelungsstange so zwischen die Stirnseite des Tragelements und die oberen Innenseiten der Ballastgewichte zu schieben, dass ein Zurückschwenken der Ballastgewichte verhindert wird.

In weiterer Ausgestaltung der Erfindung wird vorgeschlagen, dass die Verriegelungsstange mittels eines Anhängebolzens des frontseitigen Zugmauls befestigbar ist. Dabei kann dieser Anhängebolzen, der in der üblichen Bohrung des Zugmauls angeordnet ist, derart durch eine Öffnung oder Ausfräsung der Verriegelungsstange hindurchgeführt sein, dass sich die Verriegelungsstange einerseits an den Nasen der Ballastgewichte und andererseits am Anhängebolzen abstützt. Der besondere Vorteil der Befestigung der Verriegelungsstange über den Anhängebolzen ist darin zu sehen, dass ausser der Verriegelungsstange keine weiteren Befestigungsmittel erforderlich sind.

Weiterhin wird vorgeschlagen, am Tragelement im Bereich der unteren Kante Nuten vorzusehen, in die die Ballastgewichte in ihrer Endlage eingreifen. Auf diese Weise ist für eine besonders gute Festlegung der Ballastgewichte gegen Querbewegungen gesorgt. Darüber hinaus kann aber auch zwischen den Vorsprüngen der Ballastgewichte und der Ausnehmung im Tragelement eine kraftschlüssige Verzahnung vorgesehen sein.

Zur weiteren Erläuterung der Erfindung wird auf die Zeichnung verwiesen, in der drei Ausführungsbeispiele vereinfacht dargestellt sind.

Es zeigen:

Fig. 1 eine Seitenansicht einer Ballastgewichtanordnung an einem Tragelement mit einer Verriegelungsstange,

Fig. 2 einen Längsschnitt gemäss Linie II-II durch die Ballastgewichtanordnung in Fig. 1 im Bereich eines am Tragelement angehängten Ballastgewichts,

Fig. 3 ein Ballastgewicht in seiner Einhängelage am Tragelement,

Fig. 4 ein Ballastgewicht, das am Tragelement durch Verschwenken bereits eine Lage kurz vor der Endlage eingenommen hat,

Fig. 5 ein Ballastgewicht, das mit seiner Nase in eine Einsenkung des Tragelements eingreift,

Fig. 6 eine Ballastgewichtanordnung mit einem Querschnitt durch ein Tragelement, welches ein Zugmaul und einen Anhängebolzen aufweist, wobei eine ebenfalls im Querschnitt dargestellte Verriegelungsstange über den Anhängebolzen befestigt ist und

Fig. 7 eine Verriegelungsstange in der in Fig. 6 benutzten Ausführungsform.

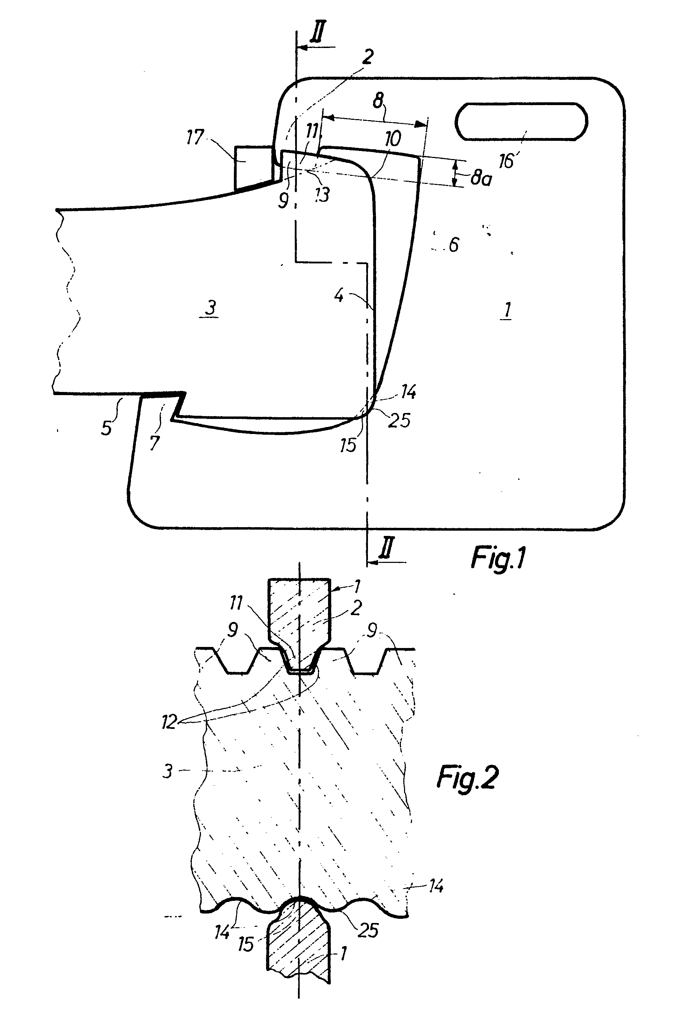

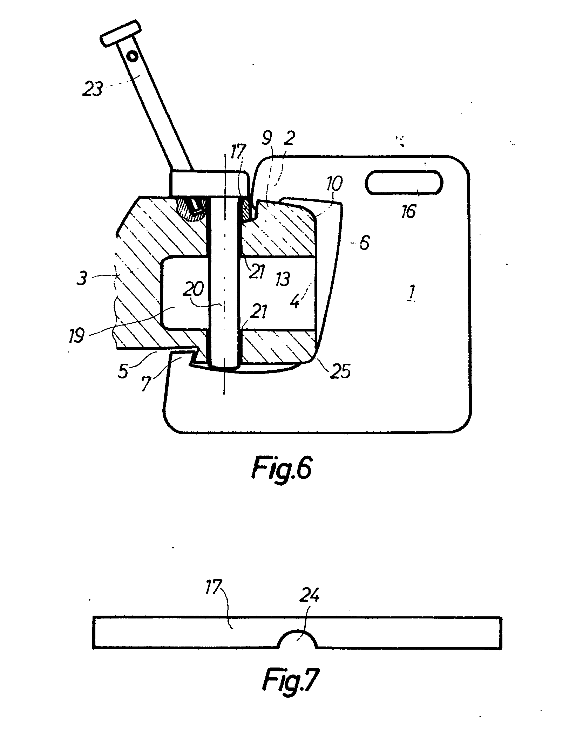

In den Fig. 1 bis 6 ist, soweit dargestellt, mit 1 ein plattenförmiges Ballastgewicht bezeichnet, das in seinem oberen Bereich eine vorspringende Nase 2 aufweist, mittels der dieses Ballastgewicht 1 an einem frontseitigen Tragelement 3 einer nicht dargestellten landwirtschaftlichen Zugmaschine eingehängt ist. Dieses Tragelement 3 weist eine Stirnseite 4 und in seinem unteren Bereich eine Ausnehmung 5 auf. Das Ballastgewicht 1 hat eine der Stirnseite 4 des Tragelements 3 zugewandte obere Innenseite 6 und in seinem unteren Bereich einen Vorsprung 7. Weiterhin weist das Ballastgewicht 1 ein Abstandsmass 8 und eine Aussparung 8a auf, die so bemessen sind, dass das Ballastgewicht mit seiner Nase 2 hinter Krallen 9 am Tragelement 3 eingehängt werden kann, wobei die obere Innenseite 6 des Ballastgewichts an einer oberen Kante 10 des Tragelements 3 anliegt. Die Nase 2 ist z.T. als Keilprofil 11 ausgebildet, das in der Endlage des Ballastgewichts 1 an ebenfalls keilförmig ausgebildeten Anlageflächen 12 der Krallen 9 anliegt, so dass das Ballastgewicht 1 gegen Querbewegungen gesichert ist. Ausserdem ist das Tragelement 3 an seiner oberen für die Einhängung der Ballastgewichte 1 vorgesehenen Fläche mit einer Schrägen 13 versehen, die in der Einhängelage beginnend sich bis zur Endlage, d.h. bis zu den Krallen 9 fortsetzt. Zur Querfixierung der Ballastgewichte 1 in ihrem unteren Bereich sind an einer unteren Kante 25 des Tragelements 3 Führungsnuten 14 vorgesehen, in die die Ballastgewichte 1 in ihrer arretierbaren Endlage mittels eines in diesem Bereich verjüngten Querschnitts 15 eingreifen. Zur einfacheren Handhabung der Ballastgewichte 1 dienen Handgriffe 16.

In den Fig. 1 und 6 dient zur Arretierung der Ballastgewichte 1 in ihrer Endlage eine Verriegelungsstange 17, die auf der Schrägen 13 des Tragelements befestigt ist und sich an den Nasen 2 der Ballastgewichte 1 abstützt, so dass ein Zurückschwenken der Ballastgewichte 1 in die Einhängelage verhindert wird.

In der Fig. 2, die einen Schnitt durch die Ballastgewichtanordnung gemäss Fig. 1 zeigt, wird verdeutlicht, wie die Nase 2 eines einzelnen Ballastgewichts 1 über ihr Keilprofil 11 in den keilförmigen Anlageflächen der Krallen 9 des Tragelements 3 angeordnet ist. Im unteren Bereich des Tragelements 3 sind, wie weiterhin diesem Schritt zu entnehmen ist, die Führungsnuten 14 angeordnet, in die das Ballastgewicht 1 mit seinem verjüngten Querschnitt 15 eingreift.

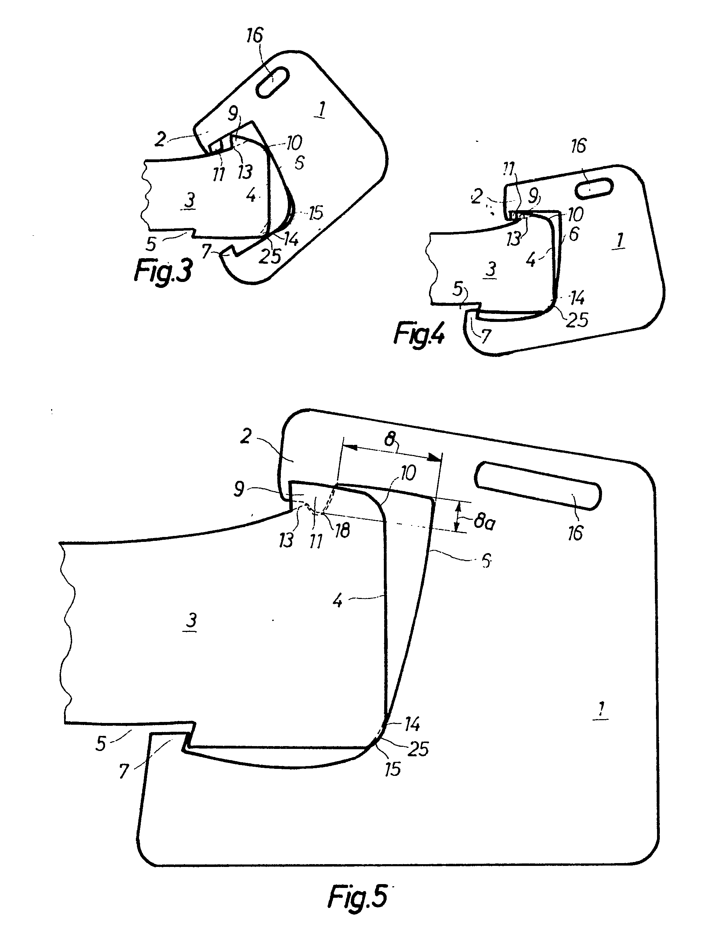

Durch die weiteren Fig. 3 und 4 wird verdeutlicht, auf welche Weise die Ballastgewichte 1 am Tragelement 3 eingehängt und arretiert werden. Dabei zeigt die Fig. 3 das Ballastgewicht 1 in seiner Einhängelage, in der die Nase 2 am Anfang der Schrägen 13 ruht und sich die obere Innenseite 6 des Ballastgewichts 1 an der oberen Kante 10 des Tragelements 3 abstützt. Bei einem weiteren Verschwenken des Ballastgewichts 1 im Uhrzeigersinn wandert die Nase 2 auf der Schrägen 13 bis in eine Stellung, die in Fig. 4 dargestellt ist, in der der Vorsprung 7 in die Ausnehmung 5 eingreift. Ein noch weiteres Verschwenken des Ballastgewichts 1 führt dazu, dass der Vorsprung 7 in einer nunmehr von dem Ballastgewicht 1 eingenommenen Endlage fest in der Aussparung 5 anliegt und jetzt nur noch ein Zurückschwenken des Ballastgewichts 1 in die Einhängelage durch eine Arretierung verhindert werden muss.

Eine weitere erfindungsgemässe Art der Arretierung der Ballastgewichte 1 in ihrer Endlage kann der Fig. 5 entnommen werden. Bei diesem Ausführungsbeispiel ist die Arretierung als Einsenkung in der Schrägen 13 ausgebildet. In diese Einsenkungen 18 rasten die Ballastgewichte 1 in ihrer Endlage ein, so dass sie nicht mehr in ihre Einhängelage zurückschwenken können. In diesem Zusammenhang sei darauf hingewiesen, dass es zweckmässig ist, bei den Ballastgewichten 1 die Lage des Schwerpunkts so zu wählen, dass die eingehängten Ballastgewichte stets das Bestreben haben, von ihrer Einhängelage in die Endlage zu schwenken.

Ein weiteres vorteilhaftes Ausführungsbeispiel der Erfindung kann anhand der Fig. 6 und 7 erläutert werden. Dabei ist das Tragelement in üblicher Weise mit einem frontseitigen Zugmaul 19 versehen, in welchem über einem Anhängebolzen 20, der in Bohrungen 21 gesteckt ist, angehängte Arbeitsmaschinen befestigt werden können. Dieser Anhängebolzen 20 ist über einen Sperrstift 22, der von einem Griffstück 23 aus betätigbar ist, in der Lage zur Ankupplung der Geräte sicherbar. Wird nun die Verriegelungsstange 17, wie in Fig. 7 dargestellt, mit einer halbzylindrischen Ausfräsung 24 versehen, so lässt sich die Verriegelungsstange 17 unter dem Anhängebolzen 20 mittels dieser Ausfräsung 24 befestigen, und die Ballastgewichte 1 sind somit auf einfache Weise in ihrer Endlage arretiert.

**Patentansprüche**

1. Ballastgewichtanordnung an landwirtschaftlichen Zugmaschinen, bei der plattenförmige Ballastgewichte (1) einzeln mittels in ihrem oberen Bereich vorgesehener vorspringender Nasen (2) in ein quer zur Längsmittelachse der Zugmaschine angeordnetes Tragelement (3), vorzugsweise frontseitiges Zugmaul, einhängbar sind, wobei die Ballastgewichte (1) in ihrem sich unter das Tragelement (3) erstreckenden Bereich jeweils einen Vorsprung (7) aufweisen, der in eine korrespondierende Ausnehmung (5) bzw. hinter einen Absatz des Tragelements (3) ragt, dadurch gekennzeichnet, dass zwischen den Nasen (2) und der der Stirnseite (4) des Tragelements (3) zugewandten oberen Innenseite (6) der Ballastgewichte (1) ein solches Abstandsmass (8) bzw. eine solche Aussparung (8a) vorgesehen ist, dass bei anliegender Innenseite (6) der Ballastgewichte (1) am Tragelement (3) bzw. bei Anliegen der oberen Kante (10) des Tragelements (3) an den oberen Innenseiten (6) die Vorsprünge (7) über die untere Kante (25) und den der Ausnehmung (5) vorgelagerten Teil des Tragelements (3) bzw. den Absatz schwenkbar sind und dass beim Verschwenken der Ballastgewichte (1) in ihrer Endlage die Ballastgewichte (1) durch mit der Nase (2) in Verbindung stehende Schrägen (13) soweit angehoben werden, dass die Vorsprünge (7) in die Ausnehmung (5) bzw. hinter den Absatz greifen und dass die Ballastgewichte (1) in der Endlage arretierbar sind.

2. Ballastgewichtanordnung nach Anspruch 1, dadurch gekennzeichnet, dass zur Arretierung der Ballastgewichte (1) in ihrer Endlage die Schrägen (13) Einsenkungen (18) aufweisen, in die die Nasen (2) der Ballastgewichte (1) eingreifen.

3. Ballastgewichtanordnung mit einer parallel zum Tragelement verlaufenden Verriegelungsstange nach Anspruch 1, dadurch gekennzeichnet, dass die Verriegelungsstange (17) auf der Schrägen (13) des Tragelements (3) derart befestigt ist, dass sie ein Zurückschwenken der Ballastgewichte (1) in die Einhängelage sperrt.

4. Ballastgewichtanordnung nach einem der Ansprüche 1 oder 3, dadurch gekennzeichnet, dass die Verriegelungsstange (17) mittels Steckbolzen am Tragelement (3) befestigt ist.

5. Ballastgewichtanordnung nach einem der Ansprüche 1, 3 oder 4, dadurch gekennzeichnet, dass die Verriegelungsstange (17) mittels Schrauben am Tragelement (3) befestigbar und gegen die Nasen (2) der Ballastgewichte (1) verspannbar ist.

6. Ballastgewichtanordnung nach einem der Ansprüche 1 oder 3, dadurch gekennzeichnet, dass die Verriegelungsstange (17) mittels eines Anhängebolzens (20) des frontseitigen Zugmauls (19) befestigbar ist.

7. Ballastgewichtanordnung nach einem der vorhergehenden Ansprüche, dadurch gekennzeichnet, dass am Tragelement (3) im Bereich der unteren Kante (25) Führungsnuten (14) vorgesehen sind, in die die Ballastgewichte (1) in ihrer Endlage eingreifen.

**Claims**

1. An arrangement of ballast weights on an agricultural tractor, in which the ballast weights (1), which are plate-shaped, are individually hookable by a protruding nose (2) provided in their respective top region on to a support (3) disposed transversely to the tractor's longitudinal axis, preferably on to the tractor's front hitch jaw, and in which the ballast weights are provided in their respective region reaching underneath the support (3) with a projection (7) extending into a matching recess (5) or behind a step of the support (3), characterized in that the extent of a clearance (8) and, respectively, of a recess (8a) between the protruding nose (2) and the top portion of each ballast weight's (1) inner face (6) facing the front end face (4) of the support (3) are such that when the inner face (6) of each ballast weight (1) abuts against the support (3) and, respectively, the upper edge (10) of the support (3) abuts against the top portion of the weight's inner face (6) the projection (7) is enabled to be swung past the bottom edge (25) of the support (3) and past that portion of the latter that is located in front of its recess (5) or its step, in that when each ballast weight (1) is being swung into its end position it is lifted, as a result of its nose (2) sliding on a slope (13), to an extent sufficient for its projection (7) to be gripped by the recess (5) or behind the step, and in that each ballast weight (1) is brakable on reaching its end position.

2. An arrangement of ballast weights according to claim 1, characterized in that each slope (13) is provided for the purpose of braking the ballast weight (1) with a detent (18) engageable by the nose (2) of each ballast weight (1).

3. An arrangement of ballast weights, including a locking rod extending parallel with the support, according to claim 1, characterized in that the locking rod (17) is arranged on the slopes (13) of the support (3) so as to prevent the ballast weights (1) from being swung back into their respective initial hooking-on position.

4. An arrangement of ballast weights according to claim 1 or claim 3, characterized in that the locking rod (17) is fastened to the support (3) by means of cotter pins.

5. An arrangement of ballast weights according to any of the claims 1, 3 or 4, characterized in that the locking rod (17) is fastenable to the support (3) by means of bolts and braceable against the noses (2) of the ballast weights (1).

6. An arrangement of ballast weights according to claim 1 or claim 3, characterized in that the locking rod (17) is fastenable by means of a coupling bolt (20) to the front hitch jaw (19).

7. An arrangement of ballast weights according to any of the preceding claims, characterized in that the support (3) is provided in the region of its bottom edge (25) with guide grooves (14) which the ballast weights (1) engage upon reaching their respective end position.

**Revendications**

1. Agencement de masses de ballast pour tracteurs agricoles, agencement dans lequel les masses de ballast (1) en forme de plaques sont susceptibles d'être accrochées à l'aide de becs (2) prévus en saillie dans la partie supérieure, dans un élément de support (3) transversal à l'axe longitudinal médian du tracteur, de préférence une gueule de traction frontale, les masses de ballast ayant dans leur zone s'étendant en-dessous de l'élément de support (3), chaque fois une saillie (7) qui vient dans une cavité (5) correspondante ou derrière un épaulement de l'élément de support (3), caractérisé en ce qu'entre les becs (2) et la face intérieure (6), supérieure des masses de ballast (1), tournée vers la face frontale (4) de l'élément de support (3), il est prévu un écartement (8) ou une cavité (8a) tels que lorsque la face intérieure (6) de la masse de ballast (1) s'appuie contre l'élément de support (3) ou lorsque l'arête supérieure (10) de l'élément de support (3) s'appuie contre la face intérieure supérieure (6), les saillies (7) puissent passer pardessus l'arête inférieure (25) et la partie de l'élément de support (3) se trouvant devant la vacité (5) ou encore l'épaulement et en ce que lors du basculement de la masse de ballast (1) dans sa position terminale, la masse de ballast (1) soit soulevée par la surface inclinée en coopération avec le bec (2), suffisamment pour que les saillies (7) puissent venir dans la cavité (5) ou derrière l'épaulement et en ce que les masses de ballast (1) sont susceptibles d'être bloquées dans leur position terminale.

2. Agencement de masses de ballast selon la revendication 1, caractérisé en ce que pour bloquer les masses de ballast (1) dans leur position terminale, les surfaces inclinées (13) comportent des cavités (18) dans lesquelles viennent les becs (2) des masses de ballast (1).

3. Agencement de masses de ballast avec une tige de verrouillage parallèle à l'élément de support selon la revendication 1, caractérisé en ce que la tige de verrouillage (17) est fixée sur les surfaces inclinées (13) de l'élément de support (3) de façon à interdire un basculement en retour de la masse de ballast (1) dans la position d'accrochage.

4. Agencement de masses de ballast selon l'une des revendications 1 ou 3, caractérisé en ce que la tige de verrouillage (17) est fixée sur l'élément de support (3) à l'aide de goujons d'enfichage.

5. Agencement de masses de ballast selon l'une des revendications 1, 3 ou 4, caractérisé en ce que la tige de verrouillage (17) est susceptible d'être fixée sur l'élément de support (3) à l'aide de vis et d'être serrée contre les becs (2) des masses de ballast (1).

6. Agencement de masses de ballast selon l'une des revendications 1 ou 3, caractérisé en ce que la tige de verrouillage (17) est susceptible d'être fixée à l'aide d'un goujon d'accrochage (20) de la gueule de traction (19) frontale.

7. Agencement de masses de ballast selon l'une des revendications précédentes, caractérisé en ce que des rainures de guidage (14) sont prévues sur l'élément de support (3) au niveau de l'arête inférieure (25), rainures dans lesquelles les masses de ballast (1) viennent prendre lorsque'elles sont dans leur position terminale.

0 071 728

Fig.1

Fig.2

7

**Fig.6**

**Fig.7**

Fig.3

Fig.4

Fig.5